# EUROPÄISCHE PATENTANMELDUNG

(11) **EP 4 707 228 A1**
(43) Veröffentlichungstag der Anmeldung: **11.03.2026**
(21) Anmeldenummer: 25194285.0
(22) Anmeldetag: 06.08.2025
(51) Int. Cl.: B67C 3/24, B65G 47/86

(54) **FORMATTEIL ZUM ABSTÜTZEN EINES BEHÄLTERS WÄHREND DES TRANSPORTS**

(30) Priorität: 27.08.2024 DE 102024124431
(71) Anmelder: KHS GmbH, 44143 Dortmund (DE)
(72) Erfinder: Klein, Jan Fabian, 44143 Dortmund (DE); Polzin, Christian, 44143 Dortmund (DE); Mohr, Sven, 44143 Dortmund (DE); Fahldieck, Andreas, 44143 Dortmund (DE)

(57) **Zusammenfassung**

Die Erfindung betrifft ein Formatteil (1) zum Abstützen eines Behälters (2) während des Transports, insbesondere zum Abstützen einer PET-Flasche. Erfindungsgemäß ist vorgesehen, dass das Formatteil (1) einen ein Führungsprofil (3) zum Festlegen des Formatteils (1) an einer Behältertransportvorrichtung aufweisenden Grundkörper (4), einen im Bereich des Grundkörpers (4) angeordneten Behälterabstützbereich (5) zum Abstützen des Behälters (2) sowie zwei am Grundkörper (4) angeordneten Rastarmen (9a, 9b) zum zusätzlichen Festlegen des Formatteils (1) an der Behältertransportvorrichtung aufweist, wobei das Führungsprofil (3) und die beiden Rastarme (9a, 9b) zum Festlegen des Formatteils (1) an der Behältertransportvorrichtung derart gebildet und derart angeordnet sind, dass ein werkzeugloser Schnellwechsel des Formatteils (1) möglich ist.

## Beschreibung

Die Erfindung betrifft ein Formatteil zum Abstützen eines Behälters während des Transports, insbesondere zum Abstützen einer PET-Flasche, einen Greifer zum Greifen und/oder Halten eines Behälters sowie eine Behältertransportvorrichtung, insbesondere einen Schiebestern oder einen Transportstern.

Formatteile sind bereits in vielfältiger Ausgestaltung aus dem Stand der Technik bekannt und werden dabei zum Abstützen und teils auch zum Halten von Behältern während des Transports verwendet. Dazu weisen die Formatteile typischerweise eine mit einem Oberflächenabschnitt des zu transportierenden Behälters korrespondierende Form auf, um ein Abstützen in einer definierten Position zu ermöglichen. Um einen sicheren Transport des durch ein Formatteil abgestützten Behälters zu ermöglichen, ist das Formatteil an einem Teil der Behältertransportvorrichtung, beispielsweise an einem Behältertransportstern im Bereich eines Behältergreifers, lagegenau festgelegt, was typischerweise durch ein Verschrauben mit einem Rahmenbauteil oder einer Formatteilaufnahme erfolgt.

Bei diesen Behältertransportvorrichtungen mit jeweils einem Formatteil für einen zu transportierenden Behälter besteht jedoch das Problem, dass die Formatteile einem Verschleiß unterliegen und daher regelmäßig ausgetauscht werden müssen. Aufgrund der Verschraubung ist dies zeitaufwändig, sodass eine lange Betriebsunterbrechung mit den damit einhergehenden hohen Kosten notwendig ist. Darüber hinaus kann auch ein Formatwechsel der zu transportierenden Behälter einen Austausch der Formatteile notwendig machen. Schließlich ergibt sich bei verschraubten Bauteilen der Nachteil, dass ein gründliches Reinigen des Bauteils im Bereich der Schrauben sowie der dafür notwendigen Bohrungen nur schwer möglich ist, was jedoch gerade im Bereich des Transports von Nahrungsmittel- und Getränkebehältern zwingend erforderlich ist.

Der Erfindung liegt die Aufgabe zu Grunde, ein Formatteil zum Abstützen eines Behälters während des Transports bereitzustellen, das einfach und schnell wechselbar ist sowie zugleich genau und lagestabil festgelegt werden kann.

Die Aufgabe wird erfindungsgemäß durch ein Formatteil zum Abstützen eines Behälters gemäß Anspruch 1, durch einen Greifer zum Greifen und/oder Halten eines Behälters nach Anspruch 10 sowie durch eine Behältertransportvorrichtung mit einem solchen Formatteil gemäß Anspruch 11 gelöst. Vorteilhafte Weiterbildungen sind in den abhängigen Ansprüchen angegeben.

Das erfindungsgemäße Formatteil zum Abstützen eines Behälters während des Transports, insbesondere zum Abstützen einer PET-Flasche, weist einen ein Führungsprofil zum Festlegen des Formatteils an einer Behältertransportvorrichtung aufweisenden Grundkörper, wenigstens einen im Bereich des Grundkörpers angeordneten Behälterabstützbereich zum Abstützen des Behälters, insbesondere im Bereich eines Verschlussgewindes und/oder eines Neckrings und/oder einer Behälterschulter, sowie zwei am Grundkörper angeordnete Rastarme zum zusätzlichen Festlegen des Formatteils an der Behältertransportvorrichtung, insbesondere zum Bilden einer Rastverbindung mit der Behältertransportvorrichtung, auf, wobei das Führungsprofil und die beiden Rastarme zum Festlegen des Formatteils an der Behältertransportvorrichtung derart gebildet und/oder derart angeordnet sind, dass ein werkzeugloser Schnellwechsel des Formatteils möglich ist.

Der erfindungsgemäße Greifer zum Greifen und/oder Halten eines Behälters weist wenigstens ein erfindungsgemäßes Formatteil zum Abstützen eines gegriffenen und/oder gehaltenen Behälters und wenigstens einen und bevorzugt zwei Greifarme zum Greifen des Behälters auf, wobei besonders bevorzugt das Formatteil in einem Bereich zwischen beiden Greifarmen angeordnet ist.

Die erfindungsgemäße Behältertransportvorrichtung, insbesondere ein Schiebestern oder ein Transportstern, weist wenigstens eine Formatteilaufnahme und bevorzugt zahlreiche, entlang des Umfangs der Behältertransportvorrichtungen angeordnete Formatteilaufnahmen, und wenigstens ein erfindungsgemäßes Formatteil, insbesondere ein Formatteil für jede Formatteilaufnahme, auf, wobei jedes Formatteil werkzeuglos wechselbar an einer Formatteilaufnahme angeordnet ist.

Die Erfinder haben erkannt, dass eine genauso präzise und feste Festlegung eines erfindungsgemäßen Formatbauteils wie bei den herkömmlich verschraubten Formatteilen möglich ist, da mittels des Führungsprofils ein Festlegen des Formatbauteils in zwei Raumrichtungen erfolgen kann, während das Festlegen in der dritten Raumrichtung dann mittels der Rastarme und gegebenenfalls eines Endanschlags erfolgt. Aufgrund der Erfindung kann also ein zeitaufwändiger und komplizierter Formatteilwechsel vermieden werden, insbesondere da dieser werkzeuglos erfolgen kann.

Ein Formatteil im Sinne der Erfindung ist grundsätzlich ein Bauteil oder eine Baugruppe, das bzw. die den Behälter abschnittsweise abstützt und dabei in einer definierten Position festlegt. Das Formatteil kann dabei den Behälter eigenständig abstützen oder grundsätzlich auch eine Haltefunktion eines weiteren Bauteils unterstützen.

Bevorzugt ist das Formatteil zum Abstützen eines durch einen Greifer gehaltenen Behälters, insbesondere einer Flasche, gebildet und stabilisiert dabei besonders bevorzugt den gehaltenen Behälter in seiner Lage. Zusätzlich oder alternativ kann das Formatteil auch vorgesehen sein, den Behälter während der Aufnahme in einen Greifer, während der Abgabe aus einem Greifer und/oder während der Übergabe von einem ersten Greifer zu einem zweiten Greifer abzustützen und so in seiner Position festzulegen. Dies ist generell sowohl bei einem passiven Greifer als auch bei einem aktiven Greifer denkbar. Besonders vorteilhaft ist die Verwendung eines erfindungsgemäßen Formatteils bei einem Greifer, der bei einer Übergabe des Behälters zu einem weiteren Greifer gegenüber dem Behälter, insbesondere in Richtung einer Flaschentransportvorrichtung und/oder der Mitte eines Flaschentransportsterns, zurückgezogen wird, um ein Greifen des Behälters mittels des weiteren, nachfolgenden Greifers zu ermöglichen. Dabei hält das Formatteil den Behälter dann in einer definierten Position zurück, verhindert ein Zurückbewegen des Behälters gemeinsam mit dem Greifer und/oder hält den Behälter selbstständig für einen kurzen Zeitraum während der Übergabe von einem Greifer zu dem nachfolgenden Greifer.

Bei dem abzustützenden Behälter kann es sich grundsätzlich um ein beliebiges, geschlossenes oder schließbares Behältnis zur Aufnahme eines Schüttgutes, einer Flüssigkeit oder einer pastösen Substanz handeln. Bevorzugt ist der Behälter ein Lebensmittelbehälter und besonders bevorzugt ein Getränkebehälter. Beispiele für solche Getränkebehälter sind Flaschen, Dosen, Verbundwerkstoffkartons, wie Tetra-Packs, Kartons oder dergleichen aus Kunststoff, Glas, Blech und/oder einem Verbundwerkstoff. Insbesondere kann es sich um eine Getränkedose aus Blech oder um eine Kunststoffgetränkeflasche, insbesondere aus PET, handeln.

Obwohl das erfindungsgemäße Formatteil grundsätzlich im Zusammenhang einer beliebigen Vorrichtung zum Herstellen, Behandeln oder anderweitigen Handhaben eines Behälters handeln kann, ist es bevorzugt, dass das Formatteil im Zusammenhang einer Behältertransportvorrichtung und/oder mit einem bewegten Behälter eingesetzt wird. Dies setzt jedoch nicht voraus, dass der mittels des Formatteils abgestützte Behälter durchgängig in Bewegung ist. Insbesondere kann der durch das Formatteil abgestützte Behälter zeitweilig zur Behandlung oder für einen beliebigen Arbeitsschritt angehalten werden. Bei der Behältertransportvorrichtung kann es sich grundsätzlich um eine beliebige Vorrichtung zum Transport wenigstens eines, bevorzugt zahlreicher Behälter zugleich handeln. Der Transport kann dabei auf einer Transportvorrichtung stehend, gehalten und/oder schiebend erfolgen. Besonders ist aber ein hängender Transport und insbesondere ein ausschließlich hängender Transport bevorzugt. Bevorzugt sind bei dem Transport alle Behälter einzeln mittels eines Greifers gehalten und/oder mittels eines Formatteils abgestützt. Der Transport kann linear, entlang einer Kreisbahn bzw. eines Kreisbahnabschnitts oder entlang einem beliebigen anderen Bahnverlauf erfolgen. Besonders bevorzugt ist die Behältertransportvorrichtung jedoch ein Behältertransportstern und/oder ein Behälterschiebestern.

Die Behältertransportvorrichtung kann dabei eine eigenständige Vorrichtung oder aber Teil einer Anlage zum Herstellen, Behandeln oder anderweitigen Handhaben von Behältern sein. Insbesondere kann die Behältertransportvorrichtung in oder an einer Blasmaschine, einer Behälterfüllanlage, an einem Etikettierer, einem Füller, einem Verschließer, einer Beschichtungsvorrichtung zum Erzeugen einer Innenbeschichtung in einem Behälter, insbesondere als Gasbarriere, oder einer beliebigen anderen Behälterbehandlungsanlage angeordnet sein. Auch eine Verwendung im Zusammenhang einer zum Herstellen von Flaschen, Flaschenrohlingen und/oder Flaschen-Preforms ist denkbar.

Um einen Behälter eigenständig und/oder ergänzend zu einem Greifer abstützend halten zu können, weist das Formatteil einen Behälterabstützbereich auf. Ein Behälterabstützbereich ist dabei vorgesehen, in direktem Kontakt mit dem Behälter und insbesondere in direkten Kontakt mit einer Oberfläche des Behälters zu gelangen. Dies kann grundsätzlich an einer oder mehreren, beliebigen Positionen des Behälters erfolgen. Zwar ist ein solcher Kontakt im Bereich eines Verschlussgewindes und/oder eines Neckrings und/oder einer Behälterschulter bevorzugt, zusätzlich oder alternativ können beliebig viele Kontakte auch an anderen Positionen erfolgen. Dabei ist ein flächiger Kontakt, insbesondere nicht lediglich ein Punktkontakt und/oder wenigstens ein Linienkontakt, und/oder ein Kontakt in mehreren, voneinander beabstandeten Positionen der Oberfläche bevorzugt.

Das Formatteil weist erfindungsgemäß einen Grundkörper auf. Dabei sind bevorzugt alle weiteren Bauteile des Formatteils mit dem Grundkörper verbunden, an dem Grundkörper festgelegt oder als Teil des Grundkörpers gebildet. Entsprechend kann der Grundkörper generell aus beliebig vielen Bauteilen gebildet sein, die bevorzugt unbeweglich zueinander und/oder fest aneinander angeordnet sind. Bevorzugt ist wenigstens der Grundkörper mit dem Führungsprofil und dem Behälterabstützbereich einteilig bzw. einstückig gebildet und besonders bevorzugt sind zusätzlich auch die beiden Rastarme mit dem Grundkörper einstückig gebildet. Ganz besonders bevorzugt ist das gesamte Formatteil einstückig gebildet.

Zum Festlegen des Formatteils an der Behältertransportvorrichtung und/oder an einer Formatteilaufnahme weist das Formatteil und insbesondere der Grundkörper ein Führungsprofil auf. Das Führungsprofil ist bevorzugt mittig an einer Oberfläche, insbesondere der Rückseite, des Formteils und/oder an dem Formteil angeordnet. Weiterhin bevorzugt streckt sich das Führungsprofil bevorzugt parallel zu einem oder beiden Rastarmen und/oder innerhalb einer von den beiden Rastarmen gebildeten Ebene und/oder mittig zwischen den beiden Rastarmen. Weiterhin bevorzugt erstreckt sich das Führungsprofil über die gesamte Höhe des Formatteils. Das Führungsprofil ist dabei bevorzugt vorgesehen, das Formatteil in wenigstens einer Raumrichtung und besonders bevorzugt in wenigstens zwei Raumrichtungen bzw. in einer Ebene festzulegen. Ergänzend zu dem Führungsprofil oder grundsätzlich auch anstelle des Führungsprofils ist auch eine magnetische Festlegung denkbar.

Das Anordnen des Formatteils an einer Behältertransportvorrichtung mittels des Führungsprofils erfolgt bevorzugt in Längsrichtung der Rastarme und/oder rechtwinklig zur Richtung der Abstützung des Behälters verschieblich. Ebenfalls bevorzugt ist das Formatteil entlang des Führungsprofils an der Behältertransportvorrichtung ausschließlich in einer Mittellängsachsenrichtung eines abgestützten Behälters und/oder in der Höhenrichtung, insbesondere vertikal, beweglich. Entsprechend ist es weiterhin bevorzugt, dass das Führungsprofil das Formatteil radial an einer Behältertransportvorrichtung und/oder in der Transportrichtung und/oder innerhalb einer horizontalen Ebene festlegt. Ergänzend zu den Rastarmen oder grundsätzlich auch anstelle der Rastarme ist auch eine magnetische Festlegung denkbar, insbesondere mittels jeweils wenigstens eines Magnets an einem Rastarm oder anstelle eines Rastarms.

Der Grundkörper kann eine beliebige Form aufweisen, wobei der Grundkörper und/oder das gesamte Formteil bevorzugt spiegelsymmetrisch, insbesondere entlang einer sich in der Höhenrichtung erstreckenden Mittellängsachse, gebildet ist. Grundsätzlich ist aber auch eine beliebige andere, asymmetrische und/oder nicht-spiegelsymmetrische Anordnung denkbar. Weiterhin ist es bevorzugt, dass am Grundkörper wenigstens eine sich zwischen einer Vorderseite mit dem Behälterabstützbereich und einer Rückseite mit dem Führungsprofil ersteckende Aussparung, Ausnehmung oder Bohrung zum Erleichtern des Reinigens des Formatteils und/oder zum Abfließen eines Reinigungsmediums angeordnet ist.

Dabei ist die Aussparung, Ausnehmung oder Bohrung bevorzugt im Bereich des Führungsprofils angeordnet und erstreckt sich besonders bevorzugt von der Vorderseite bis in das Führungsprofil hinein.

Wenigstens der Grundkörper und/oder die Rastarme und insbesondere das gesamte Formatteil sind bevorzugt aus einem langlebigen, leicht zu reinigenden und/oder laugebeständigen Material gebildet. Besonders bevorzugt handelt es sich dabei um einen Kunststoff, insbesondere um einen Thermoplast. Die Herstellung erfolgt bevorzugt spanend bzw. spanabhebend, wobei grundsätzlich auch beliebige andere Herstellungsverfahren, beispielsweise ein Spritzgussverfahren denkbar sind. Ganz besonders bevorzugt ist das Material Poly-Laurylactam (PA12 bzw. Polyamid 12 bzw. Nylon-12) oder Polyetheretherketon (PEEK).

Die Rastarme sind vorgesehen, um das Formatteil zusätzlich zu dem Führungsprofil festzulegen und insbesondere mit einem Bauteil der Behältertransportvorrichtung bzw. einer Formatteilaufnahme zu verrasten. Dabei erfolgt bevorzugt ein Festlegen gegen ein Verschieben in der Längsachsenrichtung des Führungsprofils und/oder in einer und insbesondere der einen Richtung, in der die Beweglichkeit des Formatbauteils noch nicht durch das Führungsprofil festgelegt ist. Ideal erfolgt somit mittels des Führungsprofils und der Rastarme ein positionsgenaues Festlegen in allen drei Raumrichtungen. Grundsätzlich kann das Festlegen mittels der Rastarme oder auch anstelle der Rastarme mittels wenigstens eines Film- bzw. Festkörpergelenks erfolgen.

Um einen besonders schnellen Formatteilwechsel zu ermöglichen, erfolgt das Festlegen des Formatteils mittels des Führungsprofils und/oder der Rastarme derart, dass das Formatteil händisch und/oder werkzeuglos gelöst und festgelegt werden kann. Dabei sind insbesondere keine Befestigungselemente vorgesehen, die nur mittels eines Werkzeugs gelöst oder befestigt werden können. Besonders bevorzugt erfolgt das Festlegen ausschließlich formschlüssig sowie durch ein Verrasten im Bereich der Rastarme. Insbesondere ist bevorzugt, dass dieses Verrasten ausschließlich durch beide Rastarme gemeinsam erfolgt, wozu beispielsweise sich die Rastarme jeweils und in entgegengesetzte Richtungen gegen ein Bauteil abstützen.

Bei der erfindungsgemäßen Behältertransportvorrichtung sind bevorzugt alle Formatteilaufnahmen in gleichem Abstand zueinander und/oder um einen identischen Winkel entlang des Umfangs der Behältertransportvorrichtung zueinander angeordnet. Ebenfalls bevorzugt ist die Formatteilaufnahme im Bereich eines Behältergreifers und/oder an einem Behältergreifer, insbesondere im Bereich zwischen zwei Greifarmen eines Greifers, angeordnet.

Eine bevorzugte Ausgestaltung des erfindungsgemäßen Formatteils sieht vor, dass im Behälterabstützbereich wenigstens ein, bevorzugt wenigstens zwei und besonders bevorzugt wenigstens drei Behälterabstützelemente angeordnet sind, wobei ein erstes Behälterabstützelement zum Abstützen des Behälters oberhalb des Neckrings und/oder im Bereich des Verschlussgewindes und/oder ein anderes Behälterabstützelement zum Abstützen des Behälters unterhalb des Neckrings und/oder oberhalb der Behälterschulter und/oder ein anderes Behälterabstützelement zum Abstützen des Behälters an der Behälterschulter, insbesondere ausschließlich an der Behälterschulter, vorgesehen und insbesondere dazu gebildet ist. Bevorzugt erfolgt ein Abstützen mittels eines Behälterabstützelements und insbesondere mittels jeweils eines Behälterabstützelements im Bereich eines Verschlussgewindes und des Neckrings und der Behälterschulter. Grundsätzlich ist aber auch denkbar, dass ein Abstützen lediglich an zwei dieser drei Positionen erfolgt, wobei dann bevorzugt auf ein Abstützen im Bereich der Behälterschulter verzichtet wird. Dabei ist das jeweilige Behälterabstützelement für den Bereich des Verschlussgewindes und/oder des Neckrings und/oder der Behälterschulter bevorzugt Teil des Formatteils, wobei auch grundsätzlich denkbar ist, dass eines oder mehrere dieser Behälterabstützelemente ein eigenständiges Bauteil und/oder nicht gemeinsam mit dem Formatteil auswechselbar festgelegt ist.

Im Bereich des Verschlussgewindes und/oder des Neckrings erfolgt bevorzugt ein Kontakt zum Abstützen des Behälters über einen Winkelbereich entlang des Umfangs des Behälters zwischen 10° und 180°, besonders bevorzugt zwischen 15° und 90° und ganz besonders bevorzugt zwischen 20° und 45°. Zusätzlich oder alternativ erfolgt bevorzugt ein Kontakt zum Abstützen des Behälters im Bereich einer Behälterschulter über einen Winkelbereich entlang des Umfangs des Behälters zwischen 45° und 175°, besonders bevorzugt zwischen 90° und 170° und ganz besonders bevorzugt zwischen 135° und 170°.

Obwohl das Führungsprofil grundsätzlich beliebig gestaltet sein kann, ist eine Ausgestaltung des Formatteils bevorzugt, bei der das Führungsprofil als Nut innerhalb des Grundkörpers und/oder als T-Nut und/oder als Nut einer Schwalbenschwanzverbindung gebildet ist. Bevorzugt weist das Führungsprofil und insbesondere ein als Nut gebildetes Führungsprofil über die gesamte Länge bzw. den gesamten Verlauf eine gleichbleibende Form, Querschnittsfläche und/oder Tiefe auf. Um ein Festlegen mittels der Nut nicht nur in einer Raumrichtung, sondern zugleich auch in einer zweiten Raumrichtung in besonders einfacher Weise zu ermöglichen, weist die Nut ein hinterschnittenes Profil, insbesondere eine Gestaltung als T-Nut, auf und/oder ist eine Nut zur formschlüssigen Aufnahme und/oder ist als Rechteckführung gebildet. Generell können auch mehrere, bevorzugt zueinander parallele und/oder zueinander identisch gebildete Nuten am Führungsprofil vorgesehen sein.

Eine vorteilhafte Weiterbildung des erfindungsgemäßen Formatteils sieht vor, dass das Führungsprofil im oder am Grundkörper an einer dem Behälterabstützbereich gegenüberliegenden Rückseite angeordnet ist und/oder sich wenigstens über die gesamte Höhe des Behälterabstützbereichs und bevorzugt über die gesamte Höhe des Formatteils erstreckt. Generell ist aber auch denkbar, dass sich das Führungsprofil nur über einen Teil der Höhe des Behälterabstützbereichs bzw. des Formatteils erstreckt und/oder eine einfach oder mehrfach unterbrochene Gestaltung aufweist. Bevorzugt steht das Führungsprofil nicht aus der Oberfläche und insbesondere der Rückseite des Formatteils heraus und/oder ist vollständig innerhalb des Grundkörpers angeordnet. Die Höhe des Behälterabstützbereichs und/oder des Formatteils ist bevorzugt die Richtung entlang einer Mittellängsachse eines in dem Formatteil angeordneten Behälters und/oder die vertikale Richtung in einer Gebrauchslage des Formatteils.

Obwohl die beiden Rastarme grundsätzlich beliebig geformt und angeordnet sein können, ist eine Gestaltung des erfindungsgemäßen Formatteils bevorzugt, bei der die beiden Rastarme sich jeweils im Wesentlichen über die gesamte Höhe des Formatteils erstrecken und/oder jeweils an einem Ende des Rastarmes mit dem Grundkörper, insbesondere mit einer Endseite des Grundkörpers und/oder einer Ecke des Grundkörpers und/oder am Behälterabstützbereich angrenzend, verbunden sind. Vorzugsweise ist jeder Rastarm nur einseitig mit dem Grundkörper verbunden und weist ein freies, nicht mit dem Grundkörper verbundenes Ende auf.

Die mit dem Grundkörper verbundenen Rastarme können jeweils als eigene, an dem Grundkörper festgelegte Bauteile oder Baugruppen gebildet sein. Bevorzugt sind die Rastarme jedoch einstückig mit dem Grundkörper gebildet. Darüber hinaus ist aber auch denkbar, die Rastarme an dem Grundkörper stoffschlüssig festzulegen und insbesondere damit zu verschweißen und/oder zu verkleben. Grundsätzlich ist auch eine form- und/oder kraftschlüssige Festlegung der Rastarme am Grundkörper denkbar. Insbesondere ist bevorzugt, dass die beiden Rastarme jeweils mit dem Grundkörper im Bereich eines Behälterabstützelements für die Behälterschulter und/oder an einer unteren Außenkante des Grundkörpers verbunden sind. Grundsätzlich ist aber auch eine abweichende Gestaltung denkbar, beispielsweise mit einer Anordnung der Rastarme jeweils im Bereich der Oberseite und/oder einer Außenkante des Grundkörpers und/oder oberhalb des Behälterabstützbereichs.

Weiterhin ist bevorzugt, dass die Rastarme zum verrastenden und/oder zum kraftschlüssigen Festlegen des Formatteils an der Behältertransportvorrichtung federnd gegenüber dem Grundkörper angeordnet und/oder zumindest abschnittsweise, bevorzugt vollständig entlang der Länge des Rastarms elastisch bzw. federnd gebildet sind. Dabei weisen die beiden Rastarme bevorzugt wenigstens in einem federnden Mittelbereich, insbesondere zwischen einem am Grundkörper angeordneten Ende und einer Haltebolzenaufnahme, eine im Wesentlichen gleichbleibende und/oder rechteckige Querschnittsfläche auf und/oder sind einstückig gebildet.

Zudem ist eine Ausgestaltung des erfindungsgemäßen Formatteils bevorzugt, bei der am Grundkörper und/oder an wenigstens einem, bevorzugt beiden Rastarmen und dabei bevorzugt auf der das Führungsprofil aufweisenden Rückseite und/oder an das Führungsprofil angrenzend auf der Oberfläche des Formatteils wenigstens ein Höhenanschlag angeordnet ist, um die Höhe eines mit dem Führungsprofil an der Behältertransportvorrichtung festgelegten Formatteils festzulegen. Bevorzugt erstreckt sich der Höhenanschlag über die gesamte Breite des Rastarms und/oder des Grundkörpers und besonders bevorzugt über die gesamte Breite des Formatteils. Weiterhin ist bevorzugt, dass der Höhenanschlag aus mehreren Abschnitten gebildet ist, wobei besonders bevorzugt ein Abschnitt am Grundkörper und jeweils ein Abschnitt an einem Rastarm angeordnet ist. Weiterhin bevorzugt sind alle Abschnitte des Höhenanschlags auf einer gemeinsamen Höhe am Formatteil angeordnet.

Obwohl das Zusammenwirken und insbesondere ein Verrasten des Formatteils mittels der Rastarme in beliebiger Weise erfolgen kann, ist es bevorzugt, dass die beiden Rastarme spiegelsymmetrisch zueinander angeordnet und/oder gebildet sind und/oder jeweils eine Haltebolzenaufnahme aufweisen, um das Formatteil mittels des Rastarmes an jeweils einem Haltebolzen der Behältertransportvorrichtung festzulegen und insbesondere zu verrasten, wobei die Haltebolzenaufnahme bevorzugt auf einer dem Grundkörper abgewandten Seite des jeweiligen Rastarms angeordnet ist. Um ein besonders gutes Zusammenwirken des Rastarms mit dem jeweiligen Haltebolzen zu ermöglichen, weist die Haltebolzenaufnahme eines jeden Rastarmes bevorzugt eine an die Form, den Durchmesser und/oder die Querschnittsfläche des Haltebolzens, wenigstens in der zum Zusammenwirken mit dem Rastarm vorgesehenen Oberfläche, angepasste Form auf und ist dabei besonders bevorzugt kreisabschnittsförmig gebildet. Hierdurch wird ergänzend zum Kraftschluss in vorteilhafter Weise auch ein Formschluss erreicht. Entsprechend sind auch ein Formatteil und eine Behältertransportvorrichtung bevorzugt, bei denen die beiden Rastarme derart gebildet und/oder vorgespannt sind, dass beim Anordnen des Formatteils an der Formatteilaufnahme die Rastarme das Formatteil im Bereich der Haltebolzenaufnahme mit den Haltebolzen teils formschlüssig festlegen sowie auch kraftschlüssig verspannen.

Ein wesentlicher Teil der vorliegenden Erfindung ist es, dass das Formatteil werkzeuglos und/oder händisch gewechselt werden kann. Dies wird besonders vorteilhaft erreicht, wenn das Formatteil derart gebildet ist, dass ein Festlegen des Formatteils an der Behältertransportvorrichtung ausschließlich mittels des Führungsprofils und/oder der beiden Rastarme und/oder dem Höhenanschlag erfolgt und insbesondere keine weiteren Befestigungsmittel, wie Schrauben, Bolzen, Klammern oder dergleichen, zum Festlegen verwendet werden.

Eine bevorzugte Weiterbildung des erfindungsgemäßen Formatteils und entsprechend auch einer betreffenden Behältertransportvorrichtung sieht vor, dass die Formatteilaufnahme ein Führungselement zum Anordnen innerhalb des Führungsprofils, insbesondere zum Aufschieben des Formatteils mit dem Führungselement innerhalb des Führungsprofils, sowie zwei Haltebolzen zum Zusammenwirken mit einem der beiden Rastarme und insbesondere einer am Rastarm angeordneten Haltebolzenaufnahme aufweist. Die beiden Haltebolzen sind dabei bevorzugt identisch zueinander gebildet und/oder parallel zueinander angeordnet. Weiterhin bevorzugt sind die beiden Haltebolzen in gleichem Abstand zum Führungselement und/oder auf einer gemeinsamen, rechtwinklig zum Führungselement verlaufenden Geraden angeordnet. Ebenfalls bevorzugt sind die beiden Haltebolzen und/oder das Führungsprofil von einer ebenen Oberfläche umgeben, die besonders bevorzugt orthogonal zu den Haltebolzen verläuft und/oder sich über die gesamte Kontaktfläche der Rückseite des Formatteils mit der Formatteilaufnahme erstreckt. Grundsätzlich ist selbstverständlich auch denkbar, dass das Formatteil anstelle des Führungsprofils und insbesondere einer Führungsnut das Führungselement aufweist und/oder an der Formatteilaufnahme das Führungsprofil und insbesondere die Führungsnut angeordnet ist.

Zudem ist bevorzugt, dass das Führungselement und das Führungsprofil formschlüssig zusammenwirken und dazu besonders bevorzugt korrespondierende Querschnittsprofile aufweisen. Weiterhin ist bevorzugt, dass sich das Führungselement so weit entlang der Höhe und/oder entlang einer Länge erstreckt, dass sich das Führungselement wenigstens über die gesamte Länge und besonders bevorzugt im Wesentlichen über die Länge des Führungsprofils erstreckt und entsprechend insbesondere bevorzugt dieses vollständig ausfüllt.

Weiterhin ist eine Ausgestaltung des Formatteils sowie der Behältertransportvorrichtung bevorzugt, bei der die beiden Rastarme an einem freien bzw. nicht mit dem Grundkörper verbundenen Ende eine zugespitzte Form und insbesondere eine Anschrägung in Richtung der Haltebolzenaufnahme aufweisen. Dabei ist die Anschrägung vorgesehen, um beim Aufschieben des Formatteils mit dem Führungsprofil auf das Führungselement die Rastarme an der Oberfläche der Haltebolzen in Richtung des Grundkörpers verbiegen und somit die Rastarme an den Haltebolzen entlang verschieben zu können, bis die Haltebolzen im Bereich der Haltebolzenaufnahme angeordnet sind. Durch die Anschrägung wird zudem verhindert, dass ein Rastarm vor einen Haltebolzen stößt und nicht daran vorbei geschoben werden kann oder beim Auftreffen auf die Oberfläche des Haltebolzen in Richtung der falschen Seite des Haltebolzens abgelenkt werden kann.

Schließlich sieht eine bevorzugte Weiterbildung der erfindungsgemäßen Behältertransportvorrichtung vor, dass das Formatteil derart an einer Formatteilaufnahme eines an der Behältertransportvorrichtung angeordneten Greifers festgelegt ist, dass das Formatteil und insbesondere der Behälterabstützbereich des Formatteils auf der Höhe des Greifers, zwischen zwei Greifarmen des Greifers und/oder zwischen einem Greifbereich der Greifarme des Greifers und der übrigen Behältertransportvorrichtung angeordnet ist.

Zwei Ausführungsbeispiele werden nachfolgend mit Bezug auf die Zeichnungen näher erläutert. Es zeigen:
- Fig. 1: eine Seitenansicht einer ersten Ausführung eines Greifers mit einem darin gehaltenen und von einem Formatteil abgestützten Behälter,
- Fig. 2: eine Frontalansicht des in Fig. 1 dargestellten Behälters, Greifers und Formatteils,
- Fig. 3: eine perspektivische Ansicht der ersten Ausführung des Greifers mit einem Formatteil,
- Fig. 4: eine Oberseitenansicht des in Fig. 3 dargestellten Greifers mit einem Formatteil,
- Fig. 5: eine Seitenansicht des in Fig. 3 dargestellten Greifers mit einem Format- teil,
- Fig. 6: eine Vorderseitenansicht des in Fig. 3 dargestellten Greifers mit einem Formatteil,
- Fig. 7: eine perspektivische Detailansicht des an einer Formatteilaufnahme angeordneten Formatteils der ersten Ausführung,
- Fig. 8: eine isolierte, perspektivische Ansicht der in Fig. 7 dargestellten Formatteilaufnahme,
- Fig. 9: eine perspektivische Vorderseitenansicht des Formatteils der ersten Ausführung,
- Fig. 10: eine perspektivische Rückseitenansicht des Formatteils der ersten Ausführung,
- Fig. 11: eine Seitenansicht des Formatteils der ersten Ausführung,
- Fig. 12: eine Oberseitenansicht des Formatteils der ersten Ausführung,
- Fig. 13: eine perspektivische Ansicht einer zweiten Ausführung eines Greifers mit einem abweichend gestalteten Formatteil,
- Fig. 14: eine perspektivische Vorderseitenansicht des an einer Formatteilaufnahme angeordneten Formatteils der zweiten Ausführung,
- Fig. 15: eine perspektivische Vorderseitenansicht des Formatteils der zweiten Ausführung, und
- Fig. 16: eine perspektivische Rückseitenansicht des Formatteils der zweiten Ausführung.

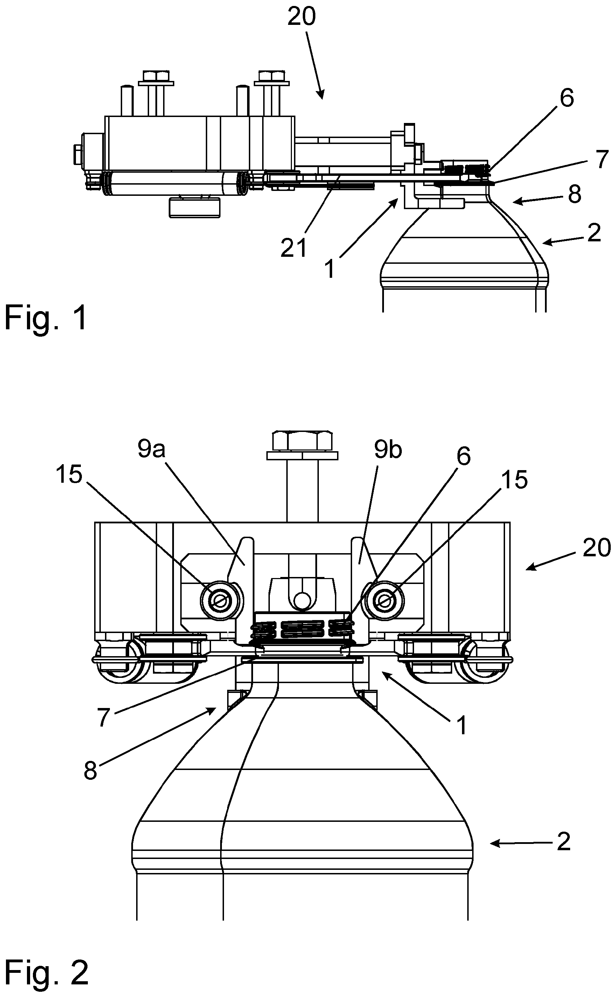

Eine Behältertransportvorrichtung weist zahlreiche, zueinander identische Greifer 20 auf, die jeweils einen Behälter 2 mittels eines Paares von Greifarmen 21 halten können. Dabei wird der Behälter 2 mittels der Greifarme 21 zwischen einem Neckring 7 und einem Verschlussgewinde 6 des Behälters 2 gehalten (siehe Fig. 1 und 2).

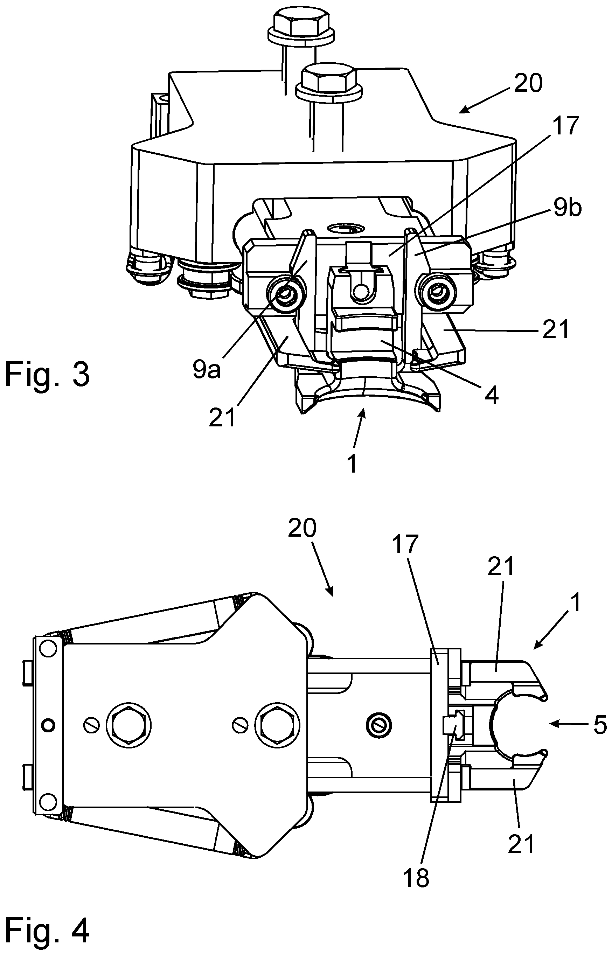

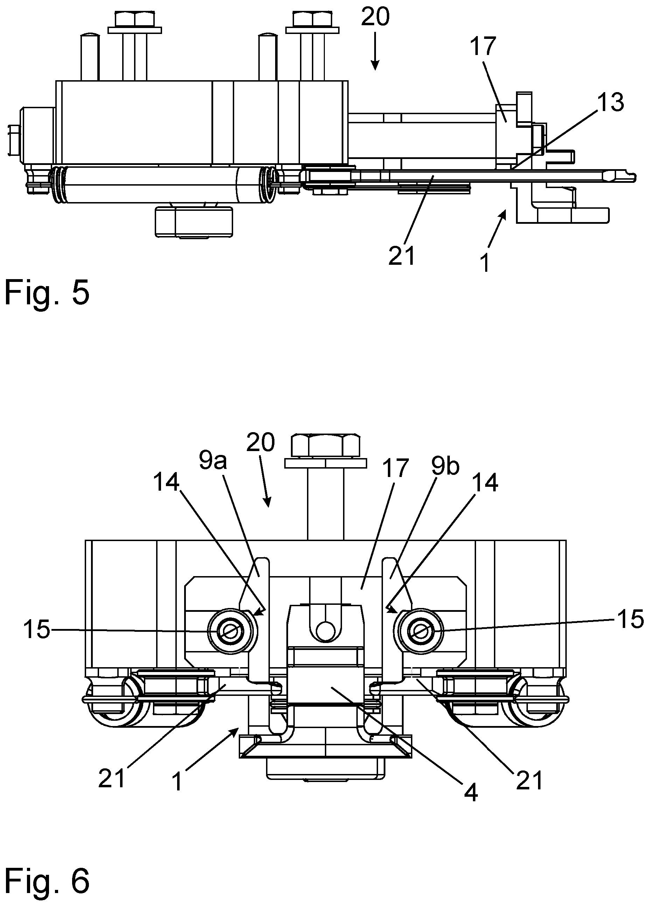

Um ein besonders lagegenaues Greifen und Halten des Behälters 2 in dem Greifer 20 zu ermöglichen und diese Lagegenauigkeit auch bei einer Übergabe des Behälters 2 an einen weiteren Greifer einer nachfolgenden Behältertransportvorrichtung zu ermöglichen, ist in einem Bereich zwischen den beiden Greifarmen 21 ein Formatteil 1 angeordnet (siehe Fig. 3 - 6).

Das Formatteil 1 ist dabei zum Abstützen des Behälters 2 vorgesehen und weist dazu an einem Grundkörper 4 einen Behälterabstützbereich 5 auf. Innerhalb dieses Behälterabstützbereichs 5 sind insgesamt drei Behälterabstützelemente 10a-c vorgesehen, wobei das erste Behälterabstützelement 10a entlang einer Höhe des Behälters 2 das oberste Behälterabstützelement 10a ist und zur flächigen Anlage an einem Bereich eines Verschlussgewindes 6 des Behälters 2 gebildet ist. Das zweite Behälterabstützelement 10b ist mittig zwischen den anderen beiden Behälterabstützelementen 10a, 10c angeordnet und zur flächigen Anlage unmittelbar unterhalb sowie zugleich an einem Neckring 7 des Behälters 2 vorgesehen. Schließlich ist entlang der Höhe des Behälters 2 unterhalb der beiden anderen Behälterabstützelemente 10a, b ein drittes Behälterabstützelement 10c angeordnet, das zur flächigen Anlage an einer Behälterschulter 8 vorgesehen ist.

Zum Festlegen des Formatteils 1 an dem Greifer 20 ist eine Formatteilaufnahme 17 vorgesehen, die zum form- und kraftschlüssigen Festlegen des Formatteils 1 zum einen zwei zueinander parallele und im Abstand zueinander angeordnete Haltebolzen 15 aufweist. Zum anderen ist mittig zwischen den beiden Haltebolzen 15 an der Formatteilaufnahme 17 ein sich in Richtung der Höhe erstreckendes und aus der Oberfläche der Formatteilaufnahme 17 herausstehendes Führungselement 18 angeordnet. Das Führungselement 18 weist dabei eine T-förmige bzw. eine hammermutterförmige Querschnittsfläche auf.

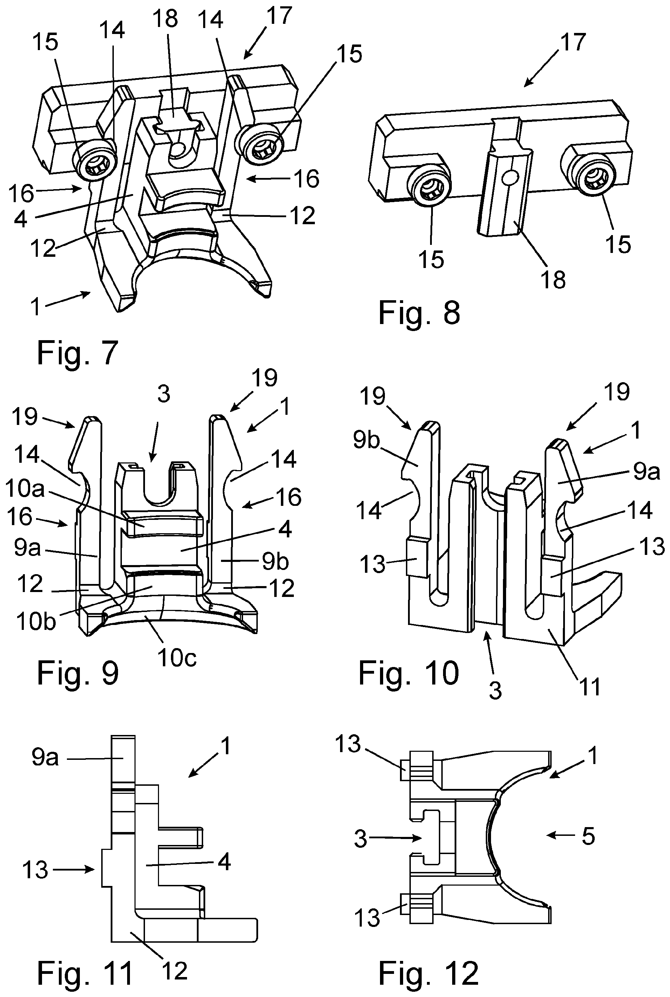

Zum lagegenauen und unbeweglichen Festlegen des Formatteils 1 an dem Greifer 20 bzw. an der Formatteilaufnahme 17 weist das Formatteil 1 zunächst ein als T-Nut gebildetes Führungsprofil 3 auf, das innerhalb des Grundkörpers 4 sowie im Bereich einer dem Behälterabstützbereich 5 gegenüberliegenden Rückseite 11 des Formatteils 1 angeordnet ist. Das Führungsprofil 3 erstreckt sich dabei mit einem gleichbleibenden Querschnitt über die gesamte Höhe des Formatteils 1, sodass das Formatteil 1 von unten her auf das Führungselement 18 aufgeschoben werden kann und dann das Formatteil 1 in zwei Raumrichtungen festgelegt ist, während lediglich entlang des Führungselements 18 ein Verschieben möglich ist (siehe Fig. 7 - 12).

Um auch ein Festlegen in dieser dritten Raumrichtung entlang des Führungselements 18 zu erreichen, weist das Formatteil 1 zwei seitlich an den Grundkörper 4 angeformte Rastarme 9a, 9b auf, wobei das Formatteil 1 einstückig einschließlich des Grundkörpers 4 und der Rastarme 9a, 9b gebildet ist. Die Rastarme 9a, 9b sind an einem Ende 12 an den Grundkörper 4 angeformt und erstrecken sich parallel zueinander, zu dem Grundkörper 4 sowie zu dem Führungsprofil 3. Weiterhin sind die Rastarme 9a, 9b elastisch federnd gebildet und weisen jeweils an ihrer von dem Grundkörper 4 abgewandten Außenseite 16 eine Haltebolzenaufnahme 14 in Form einer kreisabschnittförmigen Ausnehmung auf.

Das tatsächliche Festlegen des Formatteils 1 im Bereich der Rastarme 9a, 9b erfolgt durch ein Verrasten der Rastarme 9a, 9b im Bereich der jeweiligen Haltebolzenaufnahme 14 mit einem der beiden Haltebolzen 15. Dazu wird das Formatteil 1 entlang des bereits teilweise innerhalb des Führungsprofils 3 angeordneten Führungselements 18 in der Höhe vorschoben, bis freie, angeschrägte Enden 19 der Rastarme 9a, 9b mit einem der Haltebolzen 15 in Kontakt gelangen und aufgrund der Anschrägung elastisch in einen Bereich zwischen den beiden Haltebolzen 15 ausgelenkt werden. Beim weiteren Verschieben des Formatteils 1 erreichen dann die Haltebolzenaufnahmen 14 die Haltebolzen 15 und aufgrund der federnden Eigenschaften der Rastarme 9a, 9b kommt es nicht nur zu einer formschlüssigen, sondern zugleich auch zu einer kraftschlüssigen Festlegung des Formatteils 1.

Um zudem eine besonders genaue Positionierung in der Höhe zu gewährleisten und ein weiteres Verschieben der Formatteils 1 über das Zusammenwirken der Haltebolzenaufnahmen 14 mit den Haltebolzen 15 zu verhindern, ist an den Rastarmen 9a, 9b zur Rückseite 11 weisend zudem jeweils ein Höhenanschlag 13 angeformt, der in der idealen Positionierung des Formatteils 1 mit einer Unterkante der Formatteilaufnahme 17 in Kontakt gelangt und ein weiteres Verschieben unmöglich macht.

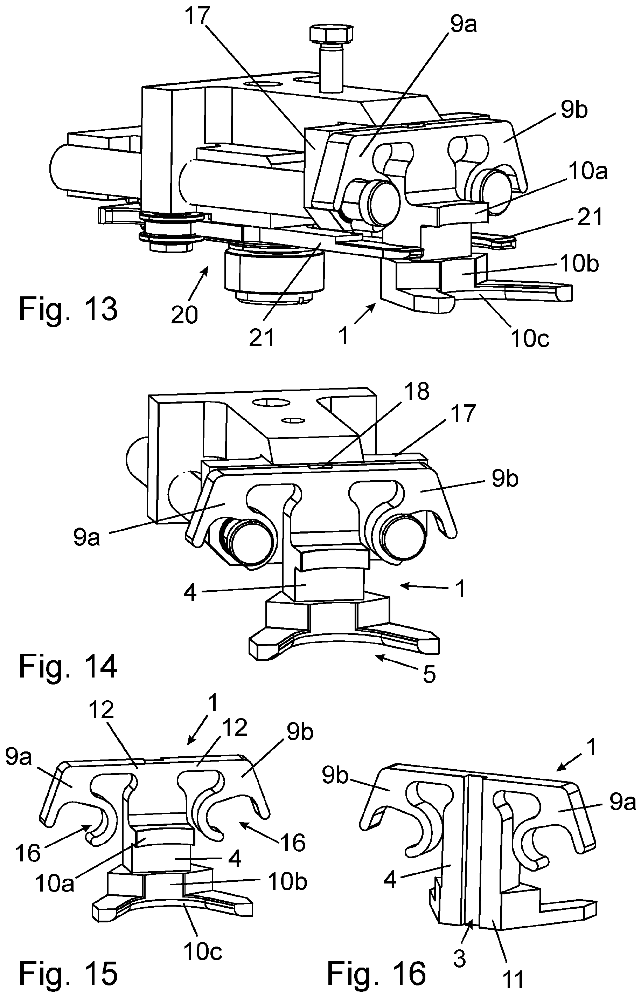

Eine in den Figuren 13 - 16 dargestellte, zweite Ausführung eines Formatteils 1 unterscheidet sich von der ersten, in den Figuren 1 - 12 dargestellten Ausführung im Wesentlichen nur in der Anordnung und Ausgestaltung der Rastarme 9a, 9b, die vorliegend am oberen Ende des Grundkörpers 4 angeordnet sind, sodass dieses Formatteil 1 nicht, wie die erste Ausführung von der Unterseite, sondern von der Oberseite her auf das Führungselement 18 aufgeschoben wird. Auch hier gelangen schließlich die Haltebolzenaufnahmen 14 der Rastarme 9a, 9b mit den Haltebolzen 15 der Formatteilaufnahme 17 in Kontakt und legen so das Formatteil 1 endgültig und positionsgenau fest.

### Bezugszeichenliste

- 1: Formatteil
- 2: Behälter
- 3: Führungsprofil
- 4: Grundkörper
- 5: Behälterabstützbereich
- 6: Verschlussgewinde
- 7: Neckring
- 8: Behälterschulter
- 9a, 9b: Rastarm
- 10a - c: Behälterabstützelement
- 11: Rückseite
- 12: verbundenes Ende des Rastarmes
- 13: Höhenanschlag
- 14: Haltebolzenaufnahme
- 15: Haltebolzen
- 16: abgewandte Seite des Rastarmes
- 17: Formatteilaufnahme
- 18: Führungselement
- 19: freies, angeschrägtes Ende des Rastarmes
- 20: Greifer
- 21: Greifarm

## Patentansprüche

1. Formatteil (1) zum Abstützen eines Behälters (2) während des Transports, mit
- einem ein Führungsprofil (3) zum Festlegen des Formatteils (1) an einer Behältertransportvorrichtung aufweisenden Grundkörper (4),
- wenigstens einem im Bereich des Grundkörpers (4) angeordneten Behälterabstützbereich (5) zum Abstützen des Behälters (2), insbesondere im Bereich eines Verschlussgewindes (6) und/oder eines Neckrings (7) und/oder einer Behälterschulter (8),
- zwei am Grundkörper (4) angeordneten Rastarmen (9a, 9b) zum zusätzlichen Festlegen des Formatteils (1) an der Behältertransportvorrichtung, wobei
- das Führungsprofil (3) und die beiden Rastarme (9a, 9b) zum Festlegen des Formatteils (1) an der Behältertransportvorrichtung derart gebildet und derart angeordnet sind, dass ein werkzeugloser Schnellwechsel des Formatteils (1) möglich ist.

2. Formatteil zum Abstützen eines Behälters nach Anspruch 1, **dadurch gekennzeichnet, dass** im Behälterabstützbereich (5) wenigstens zwei und bevorzugt drei Behälterabstützelemente (10a - c) angeordnet sind, wobei
- ein Behälterabstützelement (10a) zum Abstützen des Behälters (2) oberhalb des Neckrings (7) und/oder im Bereich des Verschlussgewindes (6) und/oder
- ein Behälterabstützelement (10b) zum Abstützen des Behälters (2) unterhalb des Neckrings (7) und/oder oberhalb der Behälterschulter (8) und/oder
- ein Behälterabstützelement (10c) zum Abstützen des Behälters (2) an der Behälterschulter (8) gebildet ist.

3. Formatteil zum Abstützen eines Behälters nach Anspruch 1 oder 2, **dadurch gekennzeichnet, dass** das Führungsprofil (3) als Nut innerhalb des Grundkörpers (4) und/oder als T-Nut gebildet ist.

4. Formatteil zum Abstützen eines Behälters nach wenigstens einem der vorhergehenden Ansprüche, **dadurch gekennzeichnet, dass** das Führungsprofil (3) im oder am Grundkörper (4) an einer dem Behälterabstützbereich (5) gegenüberliegenden Rückseite (11) angeordnet ist und/oder sich wenigstens über die gesamte Höhe des Behälterabstützbereichs (5) und bevorzugt über die gesamte Höhe des Formatteils (1) erstreckt.

5. Formatteil zum Abstützen eines Behälters nach wenigstens einem der vorhergehenden Ansprüche, **dadurch gekennzeichnet, dass** die beiden Rastarme (9a, 9b) sich jeweils im Wesentlichen über die gesamte Höhe des Formatteils (1) erstrecken und/oder jeweils an einem Ende (12) des Rastarmes (9a, 9b) mit dem Grundkörper (4) verbunden sind.

6. Formatteil zum Abstützen eines Behälters nach wenigstens einem der vorhergehenden Ansprüche, **dadurch gekennzeichnet, dass** die Rastarme (9a, 9b) zum verrastenden und/oder zum kraftschlüssigen Festlegen des Formatteils (1) an der Behältertransportvorrichtung federnd gegenüber dem Grundkörper (4) angeordnet und/oder entlang der Länge des Rastarms (9a, 9b) federnd gebildet sind.

7. Formatteil zum Abstützen eines Behälters nach wenigstens einem der vorhergehenden Ansprüche, **dadurch gekennzeichnet, dass** am Grundkörper (4) und/oder an beiden Rastarmen (9a, 9b) und dabei bevorzugt auf der das Führungsprofil (3) aufweisenden Rückseite (11) wenigstens ein Höhenanschlag (13) angeordnet ist, um die Höhe eines mit dem Führungsprofil (3) an der Behältertransportvorrichtung festgelegten Formatteils (1) festzulegen.

8. Formatteil zum Abstützen eines Behälters nach wenigstens einem der vorhergehenden Ansprüche, **dadurch gekennzeichnet, dass** die beiden Rastarme (9a, 9b) spiegelsymmetrisch zueinander gebildet sind und/oder jeweils eine Haltebolzenaufnahme (14) aufweisen, um das Formatteil (1) mittels des Rastarmes (9a, 9b) an jeweils einem Haltebolzen (15) der Behältertransportvorrichtung festzulegen, wobei die Haltebolzenaufnahme (14) bevorzugt auf einer dem Grundkörper (4) abgewandten Seite (16) des jeweiligen Rastarms (9a, 9b) angeordnet ist.

9. Formatteil zum Abstützen eines Behälters nach wenigstens einem der vorhergehenden Ansprüche, **dadurch gekennzeichnet, dass** das Formatteil (1) derart gebildet ist, dass ein Festlegen des Formatteils (1) an der Behältertransportvorrichtung ausschließlich mittels des Führungsprofils (3) und der beiden Rastarme (9a, 9b) und dem Höhenanschlag (13) erfolgt.

10. Greifer (20) zum Greifen und/oder Halten eines Behälters (2), mit
- wenigstens einem Formatteil (1) zum Abstützen eines Behälters (2) nach einem oder mehreren der vorhergehenden Ansprüche und
- wenigstens einem und bevorzugt zwei Greifarmen (21) zum Greifen des Behälters (2).

11. Behältertransportvorrichtung, insbesondere Schiebestern oder Transportstern, mit
- wenigstens einer Formatteilaufnahme (17) und bevorzugt zahlreichen, entlang des Umfangs der Behältertransportvorrichtungen angeordneten Formatteilaufnahmen (17), und
- wenigstens einem Formatteil (1) nach wenigstens einem der vorhergehenden Ansprüche 1 - 9, wobei
- jedes Formatteil (1) werkzeuglos wechselbar an einer Formatteilaufnahme (17) angeordnet ist.

12. Behältertransportvorrichtung nach Anspruch 11, **dadurch gekennzeichnet, dass** die Formatteilaufnahme (17) ein Führungselement (18) zum Anordnen innerhalb des Führungsprofils (3) sowie zwei Haltebolzen (15) jeweils zum Zusammenwirken mit einem Rastarm (9a, 9b) und insbesondere einer am Rastarm (9a, 9b) angeordneten Haltebolzenaufnahme (14) aufweist.

13. Behältertransportvorrichtung nach Anspruch 11 oder 12, **dadurch gekennzeichnet, dass** die Haltebolzenaufnahme (14) eines jeden Rastarmes (9a, 9b) eine an die Form, den Durchmesser und/oder die Querschnittsfläche des Haltebolzens (15) angepasste Form aufweist und dabei bevorzugt kreisabschnittsförmig gebildet ist.

14. Behältertransportvorrichtung nach wenigstens einem der Ansprüche 11 - 13, **dadurch gekennzeichnet, dass** die beiden Rastarme (9a, 9b) derart gebildet und vorgespannt sind, dass beim Anordnen des Formatteils (1) an der Formatteilaufnahme (17) die Rastarme (9a, 9b) das Formatteil (1) im Bereich der Haltebolzenaufnahme (14) mit den Haltebolzen (15) formschlüssig festlegen sowie auch kraftschlüssig verspannen.

15. Behältertransportvorrichtung nach wenigstens einem der Ansprüche 11 - 14, **dadurch gekennzeichnet, dass** die beiden Rastarme (9a, 9b) an einem freien, nicht mit dem Grundkörper (4) verbundenen Ende (19) eine zugespitzte Form und insbesondere eine Anschrägung in Richtung der Haltebolzenaufnahme (14) aufweisen.

16. Behältertransportvorrichtung nach wenigstens einem der Ansprüche 11 - 15, **dadurch gekennzeichnet, dass** das Formatteil (1) derart an einer Formatteilaufnahme (17) eines an der Behältertransportvorrichtung angeordneten Greifers (20) festgelegt ist, dass der Behälterabstützbereich (5) des Formatteils (1) auf der Höhe des Greifers (20), zwischen zwei Greifarmen (21) des Greifers (20) und/oder zwischen einem Greifbereich der Greifarme (21) des Greifers (20) und der übrigen Behältertransportvorrichtung angeordnet ist.
